# EUROPÄISCHE PATENTSCHRIFT

(11) **EP 0 787 293 B1**
(45) Veröffentlichungstag und Bekanntmachung des Hinweises auf die Patenterteilung: **02.02.2000**
(21) Anmeldenummer: 95935356.6
(22) Anmeldetag: 19.10.1995
(51) Int. Cl.: G01N 27/82

(54) **VORRICHTUNG UND VERFAHREN ZUR ZERSTÖRUNGSFREIEN MATERIALPRÜFUNG**
NON-DESTRUCTIVE MATERIALS TESTING DEVICE AND PROCESS
PROCEDE ET DISPOSITIF DE CONTROLE NON DESTRUCTIF DE MATERIAUX

(30) Priorität: 20.10.1994 DE 4437436
(43) Veröffentlichungstag der Anmeldung: 06.08.1997
(73) Patentinhaber: FORSCHUNGSZENTRUM JÜLICH GMBH, 52425 Jülich (DE)
(72) Erfinder: TAVRIN, Yuri, D-52428 Jülich (DE); WOLF, Walter, D-52428 Jülich (DE); KRAUSE, Joachim, D-52080 Aachen (DE)
(86) Internationale Anmeldenummer: DE9501474
(87) Internationale Veröffentlichungsnummer: WO9612950

(56) Entgegenhaltungen:
- WO-A-89/12833
- US-A- 5 293 119
- CRYOGENICS, Bd. 34, Nr. 8, August 1994 OXFORD, Seiten 667-670, XP 000438356 C.X.FAN ET AL. 'High temperature RF SQUID gradiometer applied to non-destructive testing'

## Beschreibung

Die Erfindung betrifft eine Vorrichtung zur zerstörungsfreien Materialprüfung gemäß dem Oberbegriff des Anspruchs 1. Desweiteren betrifft die Erfindung ein Verfahren zur zerstörungsfreien Materialprüfung gemäß Anspruch 7.

Die zerstörungsfreie Werkstoffprüfung metallischer Konstruktionen komplizierter Struktur, wie sie in Flugzeugen, Schiffen, Bauwerken, in der Weltraumtechnik und in vielen anderen Bereichen vorkommen, ist ein fundamentales Problem der heutigen Sicherheitstechnik, da ein Versagen von Bauteilen durch Materialfehler oder - ermüdung fatale Konsequenzen haben kann.

Die Anforderungen an die Praktibilität eines Prüfverfahrens sind derart, daß die Prüfung möglichst einfach in kurzer Zeit zu günstigen Kosten vonstatten gehen soll; freilich ohne, daß die Sicherheitsaspekte hierunter leiden. Der Ausbau von Teilen zwecks Sicherheitsüberprüfung ist daher aus Zeit- und Kostengründen nach Möglichkeit zu vermeiden. Diese Randbedingungen favorisieren ein kontaktloses Prüfverfahren.

Es gibt Einsatzgebiete bzw. Meßprobleme, für die die konventionellen Verfahren der zerstörungsfreien Werkstoffprüfung wie die Wirbelstromprüftechnik nicht geeignet sind. Besonders problematisch sind innenliegende, visuell nicht erkennbare Materialfehler. So sind sehr tiefliegende Fehler mit dem konventionellen Wirbelstromprüfverfahren, wie sie z.B. aus "Nondestructive Testing Handbook", American society for nondestructive testing, 1982, R. McMaster et al., und "Nondestructive evaluation", McGraw-Hill, New York 1989, D.E. Bray et al., bekannt sind, nicht detektierbar, da bei den erforderlichen tiefen Prüffrequenzen die Magnetfeld-Empfindlichkeit des Induktionsspulenaufnehmers zu gering ist.

Die empfindlichsten Magnetfeld-Meßsensoren bei tiefen Meßfrequenzen sind heutzutage die Superconducting Quantum Interference Devices (SQUIDs). Durch den Einsatz eines solchen höchstempfindlichen Magnetfeldsensors in Kombination mit einem Wirbelstromverfahren kann man ein Anwachsen der Empfindlichkeit um mehrere Größenordnungen im Vergleich zu konventionellen WirbelstromInduktionsspulen erreichen (A. Cochran et al., Brit. J. of NDT 35, 173 (1993). Insbesondere bei den tiefen Prüffrequenzen, die zur Detektion tiefliegender Fehler notwendig sind, tritt dieser Empfindlichkeitsvorteil deutlich hervor, da in diesem Frequenzbereich konventionelle Sensoren an ihre Grenzen stoßen.

Ein erheblicher Nachteil der üblichen SQUIDs ist, daß sie eine Betriebstemperatur von wenigen Kelvin, also knapp über dem absoluten Temperaturnullpunkt, benötigen, die nur durch eine aufwendige und teure Kühltechnik unter der Verwendung flüssigen Heliums zu erreichen ist.

Die Entwicklung stabiler und hochempfindlicher SQUIDs aus Hoch-Temperatur-Supra-Leiter (HTSL)-Material hat den rationellen Einsatz einer SQUID-Meßtechnik in der zerstörungsfreien Materialprüfung ermöglicht. Da ausschließlich flüssiger Stickstoff zur Kühlung benötigt wird, vereinfacht und verbilligt sich die erforderliche Sensor-Kühltechnik erheblich. Die laufenden Kühl-Betriebskosten reduzieren sich etwa um den Faktor 50. Der Kryostat kann bei gleicher Haltezeit erheblich verkleinert werden und wird kostenmäßig deutlich günstiger.

Als wichtig für die Konzeption eines Wirbelstrommeßverfahrens, insbesondere unter Verwendung eines HTSL-SQUIDs sind folgende drei Punkte zu nennen:
- Mit dem großen Empfindlichkeitsvorteil eines SQUIDs geht der Nachteil einher, daß ein derartig empfindlicher Sensor besonders anfällig gegenüber Umgebungsstörungen ist. In einer industriellen Umgebung sind unvermeidlich größere magnetische Störungen anzutreffen. Durch eine Gradiometeranordnung des SQUID-Sensors kann man entfernte Störquellen effizient unterdrücken. Dabei sind die Empfindlichkeitseinbußen auf nahe Quellen, wie das Prüfbauteil, gering.
- Die Empfindlichkeit eines Wirbelstrom-Meßsystems wächst bei gegebener Sensorempfindlichkeit mit der Anregungsstromstärke einer dazu vorgesehenen Anregungsspule, da das Anregungsfeld dieser Anregungsspule, der Induktionsstrom und damit das detektierte Signal am SQUID dieser proportional sind. Wichtig ist hierbei die Stabilität des Anregungsstromes, da bei hohen Strömen mit nicht hinreichender Stabilität ein Zusatzrauschen induziert wird.
- Insbesondere bei Verwendung von HTSL-SQUIDs muß darauf geachtet werden, daß die zulässigen maximalen Magnetfelder und die maximalen Feldänderungsraten (d.h. der maximale dynamische Bereich) nicht überschritten werden, da sonst ein zuverlässiger SQUID-Meßbetrieb nicht mehr gewährleistet ist.

Es ist deshalb Aufgabe der Erfindung eine Vorrichtung zu schaffen bzw. ein Verfahren bereitzustellen, wobei die Störanfälligkeit von Umgebungsrauschen verringert wird und eine Minderung von Zusatzrauschen erreichbar ist.

Die Aufgabe wird gelöst durch eine Vorrichtung gemäß der Gesamtheit der Merkmale nach Anspruch 1. Die Aufgabe wird ferner gelöst durch ein Verfahren gemäß der Gesamtheit der Merkmale nach Anspruch 7. Weitere zweckmäßige oder vorteilhafte Ausführungsformen oder Varianten finden sich in den auf jeweils einen dieser Ansprüche rückbezogenen Unteransprüchen.

Die hier beschriebene Vorrichtung bzw. Meßtechnik erlaubt eine kontaktlose Magnetfeld-Meßmethode nach dem Wirbelstromprinzip, die so konzipiert ist, daß sie vor allem mit einem HTSL-SQUID-Gradiometer (Supercond. Sci. Technol. 7, 265 (1994), Y. Tavrin et al.) als höchstempfindlichem Sensor optimal betrieben werden kann.

Von zentraler Bedeutung ist die Anregungsspulenkonfiguration. Einerseits ist die Empfindlichkeit einer Wirbelstrommethode proportional zum Anregungsstrom, da hohe Anregungsfeldstärken im Prüfbauteil benötigt werden. Andererseits arbeitet ein HTSL-SQUID nur, falls die maximalen Magnetfelder und die maximalen Feldänderungsraten nicht überschritten werden.

Es wurde erkannt, daß insbesondere bei Verwendung des Wirbelstromverfahrens in der zerstörungsfreien Materialprüfung von elektrisch leitenden Bauteilen die Anregungsspulenanordnung so zu konzipieren, daß das Anregungsmagnetfeld im Prüfbauteil maximal, am Ort des Sensors hingegen minimal ist.

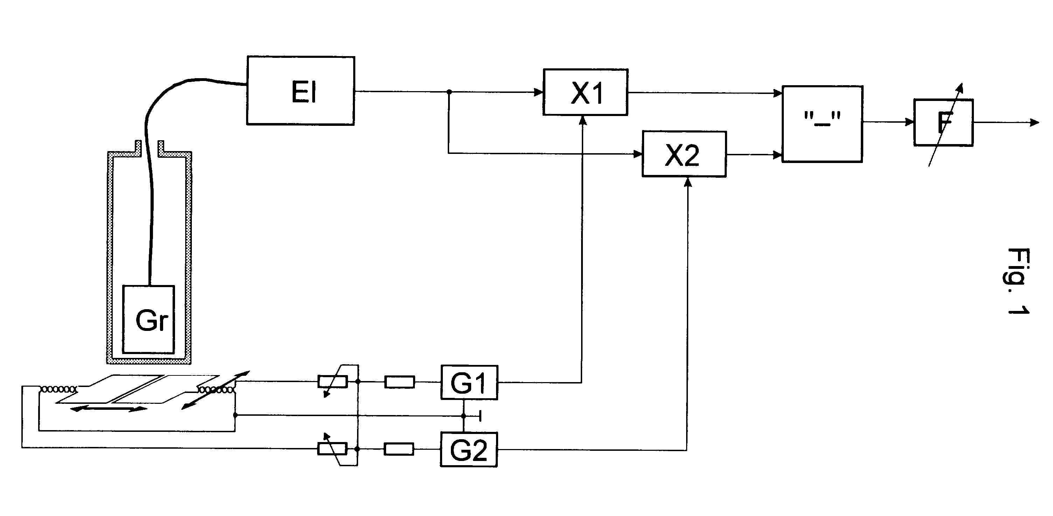

Die Anregungsspulen sind geometrisch so konstruiert, daß an den Orten der gradiometrisch angeordneten SQUID-Sensoren ein möglichst kleines Magnetfeld herrscht, obwohl hohe Ströme in den Anregungsspulen fließen und hohe Feldstärken im Prüfbauteil vorliegen (vgl. Figur 1).

Es wurde erkannt, daß so hohe Spulenströme verwendet werden können, daß in den. Zentren der Spulen Felder der Größenordnung B₁ = B₂ = 10 µT herrschen, ohne daß der SQUID-Betrieb hierdurch beeinträchtigt wird. Durch Verbesserung der mechanischen Balance ist die Möglichkeit, noch höhere Felder anzulegen und damit die Empfindlichkeit es Meßsystems weiter zu steigern, gegeben.

Ein Vorteil der Erfindung besteht darin, daß das Rauschen des Sensor-SQUIDs und damit die Empfindlichkeit des Meßsystems durch derartig hohe Ströme nicht beeinflußt wird, wie durch einfachen Vergleich des Rauschens mit und ohne Anregungsfeld experimentell festgestellt wurde.

Das Rauschen des SQUID-Systems und der Umgebung zeigt ein 1/f-Verhalten für Frequenzen unterhalb 1 Hz (in magnetisch ruhiger Umgebung) oder im Bereich von bis zu 10 Hz (in industrieller Umgebung) und weißes Rauschen oberhalb dieser Grenzfrequenz. Bei typischen Scangeschwindigkeiten von 0,1 bis 1 m/s und Meßabständen im Zentimeterbereich liegen die magnetischen Signale gerade in diesem ungünstigen Frequenzbereich von wenigen Hertz, in dem das Rauschen anzuwachsen beginnt.

Gemäß einer vorteilhaften Ausführungsform nach Anspruch 2 kann durch die Verwendung einer höherliegenden Wirbelstrom-Anregungsfrequenz vorteilhaft in einem schmalen Bandbereich nahe der Anregungsfrequenz transformiert werden, in dem das Rauschen niedriger ist. Dazu kann gemäß Anspruch 3 eine Lock-In-Technik zur Detektion vorgesehen werden.

Die Verwendung eines axialen Gradiometertyps gemäß Anspruch 5 ermöglicht den Einsatz einer einfach zu justierenden Nullmethode. Im Gegensatz zu Planargradiometern, deren maximale Basislänge durch die größtmögliche HTSL-Schichtdepositionsweite auf etwa 40 mm beschränkt wird, läßt sich ein elektronisches Axialgradiometer praktisch mit beliebig großer Basislänge und damit sehr hoher Gradientenempfindlichkeit realisieren. Damit wird eine sehr genaue Fehlerlokalisation ermöglicht.

Der Aufbau ermöglicht einen schnellen Wechsel der Anregungsfrequenz, da nur die Bandpaßfilterung am Ausgang auf den durch Anregungsfrequenz und Scangeschwindigkeit vorgegebenen Frequenzbandbereich eingestellt werden muß.

Experimentell wurde verifiziert, daß ein Wechsel der Anregungsfrequenz zwischen 10 und 200 Hz keinen Einfluß auf die Anregungsfeldunterdrückung (Balance) hat.

Für Untersuchungsanwendungen an Materialien komplizierter geometrischer Struktur wird gemäß Anspruch 4 eine Schaltung mit Zwei-Fragmenten-Substraktion vorgeschlagen, um Effekte durch Bewegung der Probe, durch Probentopographie und Probenrandeffekte möglichst effizient zu unterdrücken. Dazu wird im einzelnen durch Verwendung zweier Anregungsfrequenzen in den Anregungsspulen, getrennte Lock-in-Detektion der Sensorantwort auf beiden Frequenzen und anschließende Substraktion beider Signale erreicht, daß die Bauteilantwort tiefenspezifisch evaluierbar wird (vgl. Figur 1).

In der Praxis ist es dabei zweckmäßig eine hohe Frequenz zur Oberflächenabtastung und eine tiefe Frequenz zur Detektion der Fehler zu verwenden. Die Subtraktion ermöglicht die Unterdrückung der auf beiden Frequenzen registrierten Bauteilinhomogenitäten gegenüber dem nur in der Antwort auf die tiefe Frequenz gesehenen Fehlersignales.

Die Benutzung eines logarithmischen Verstärkers oder einer logarithmischen Anzeige ermöglicht eine Simultanbeobachtung von Nutzsignal und Rauschuntergrund.

Sind die zu untersuchenden Strukturen so kompliziert, daß trotz Zwei-Frequenzen-Subtraktion die Fehlersignale zu klein gegenüber dem Materialstruktursignal sind, die Fehler also in dem stark varierenden Grundsignal des Bauteils nicht oder schlecht zu erkennen sind, kann eine rechnergestützte Bildverarbeitungs-Auswertemethode eingesetzt werden. Eine oder mehrere Referenzmessungen an baugleichen intakten Teilen werden durch eine wohldefinierte Bewegung der Vergleichsobjekte aufgenommen und im Rechner gespeichert. Von der Messung eines potentiell defekten Bauteiles wird der Mittelwert der Referenzmessungen mittels Standard-Bildverarbeitungstechniken subtrahiert. Die sehr hohe Empfindlichkeit und exzellente Dynamik des SQUID-Systems ermöglicht so durch eine effiziente Unterdrückung starker konstruktionsbedingter Bauteilsignale die Untersuchung komplizierter Materialstrukturen.

Die Erfindung ist sowohl mit Tief-Temperatur-SQUID - als auch gemäß Anspruch 6 vorteilhaft mit HTSL-SQUID-System realisierbar. Dabei ist neben der hohen Empfindlichkeit des Sensors die stark reduzierte Kühltechnik einer der Vorteile.

Zusammenfassend weist die Erfindung folgende Merkmale auf:
- Der Sensor-SQUID befindet sich in einer GradiometerAnordnung (entweder konventionelle Differenzschaltung von Sensor-SQUID und Referenz-SQUID oder Sensor-SQUID im Gradiometer-Flußtransformator aus HTSL-Schicht- und Massivmaterial).
- Das Spulensystem besteht gemäß Anspruch 2 aus einer geraden Anzahl von planaren Spulen, insbesondere variabler Windungszahl parallel zum Sensor-SQUID auf der dem Referenzaufnehmer abgewandten Seite.
- Die Spulen sind paarweise um die SQUID-Position punktsymmetrisch angeordnet, die Symmetrieachse entspricht der Gradiometerachse. Zur genauen Justage sind die Spulen lateral verschiebbar angebracht. Die Parallelität von Spulen-Symmetrieachse und Gradiometerachse ist einstellbar.
- Die Spulen werden von einem phasengleichen Wechselstrom durchflossen, dessen Amplitude für jede Spule individuell einstellbar ist.
- Die Regel- und Auswerteelektronik ist mit einem Bandpaßfilter möglichst hoher Güte, d.h. mit großer Steilheit und geringer Frequenzbandbreite um die Zentralfrequenz des Spulenstromms ausgestattet. Zur ausschließlichen Detektion der Materialantwort auf die Wirbelstromanregung durch die Spulen wird eine Lock-In-Detektion des SQUID-Ausgangssignals mit dem Spulenstrom als Referenz vorgenommen.

Die Erfindung wird anhand von Figuren und Beispiel näher erläutert. Es zeigen:
- Figur 1: Schematische Darstellung des Aufbaus mit zwei Anregungsfrequenzen;
- Figur 2: Zwei-Spulen-Geometrie;
- Figur 3: Vier-Spulen-Geometrie;
- Figur 4: Geometrie mit zwei D-förmigen Spulen;
- Figur 5: Schematischer, experimenteller Aufbau der Vorrichtung;
- Figur 6a: Testmessung mit Defekt;
- Figur 6b: Testmessung ohne Defekt.

In Figur 1 ist die erfindungsgemäße Vorrichtung zur zerstörungsfreien Materialprüfung schematisch dargestellt. Sie stellt einen Aufbau mit zwei Anregungsfrequenzen dar.

In einem Kühlbehälter zum Betrieb beispielsweise bei flüssigem Stickstoff ist das Gradiometer Gr enthalten. Zur Gradiometerachse symmetrisch angeordnet sind unterhalb des Behälters ein Paar Anregungsspulen, die mit Anregungsfrequenzgeneratoren G1 und G2 verbunden sind. Das mit dem Gradiometer Gr aufgenommene Signal wird von einer Elektronik El an Lock-In-Verstärker X1 und X2 weitergeleitet, die auch mit den Generatoren G1 und G2 verbunden sind. Die Signale des X1 und X2 werden über einen Differenzbildner "-" an ein variabeles Ausgangfilter F zur weiteren Verarbeitung weitergeleitet.

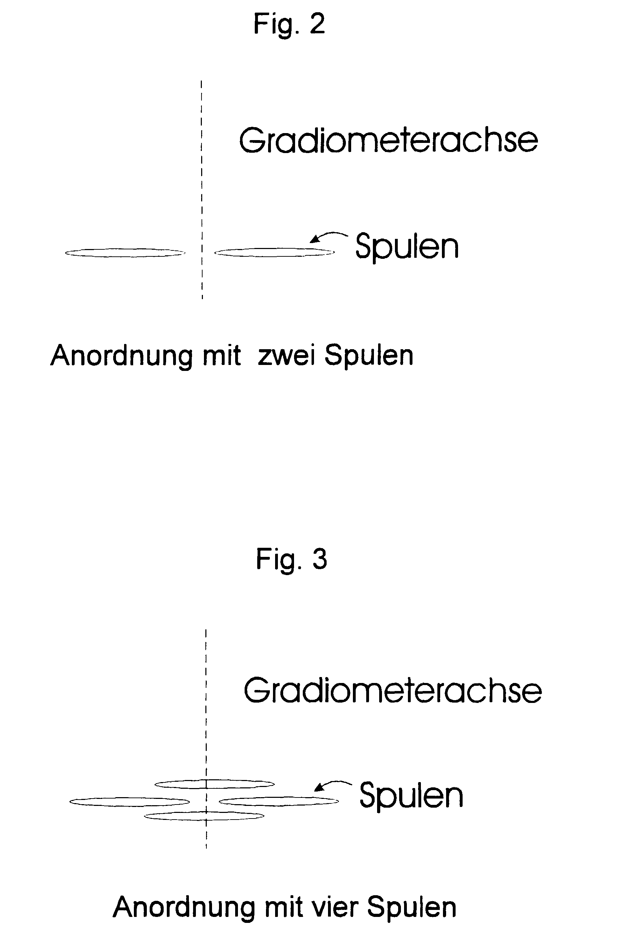

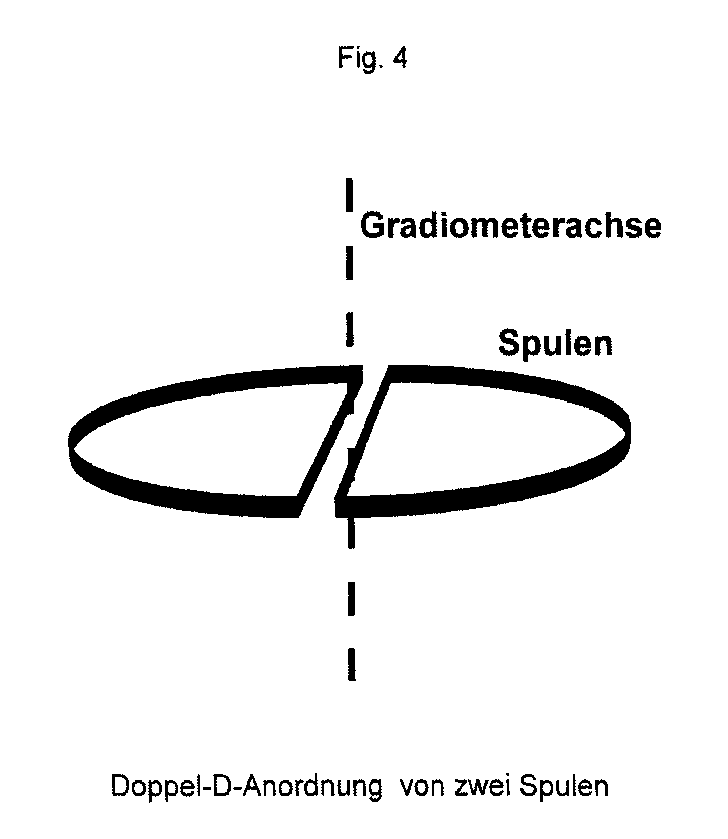

In Abwandlung ist es vorstellbar, die beiden Spulen kreisförmig auszubilden (Figur 2) oder vier Spulen zueinander äquidistant mit ihren jeweiligen Mitten auf einem Kreis liegend, durch deren Mitte die Gradiometerachse senkrecht verläuft, anzuordnen (Figur 3). Auch ist es vorstellbar die Spulen, wie aus Figur 4 entnehmbar, jeweils D-förmig auszubilden. Selbstverständlich beschränkt sich die Erfindung nicht auf Spulen mit einer einzigen Windung. Vielmehr sind auch Spulen mit mehreren Windungen denkbar oder sogar erwünscht.

Bei der Spulenanordnung nach Figur 4 handelte es sich um eine Doppel-D-Anordnung von zwei Spulen mit einem Kreisradius von jeweils 50 mm. Bei einer Windungszahl von vier Windungen zeigten die Spulen einen maximalen "Peak to Peak"-Strom von 1 Ampere im Wechselstrombetrieb. Gebildet wurden die Spulen von Kupferdrähten mit einem Drahtdurchmesser von 0,2-0,3 mm. Die gewählte D-Form der Spulen läßt ein erleichtertes balancieren zu.

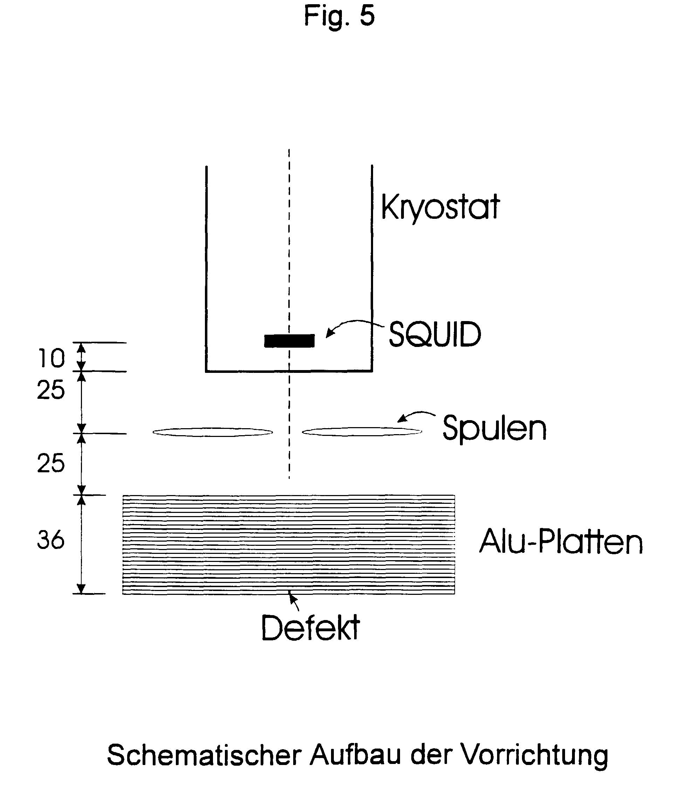

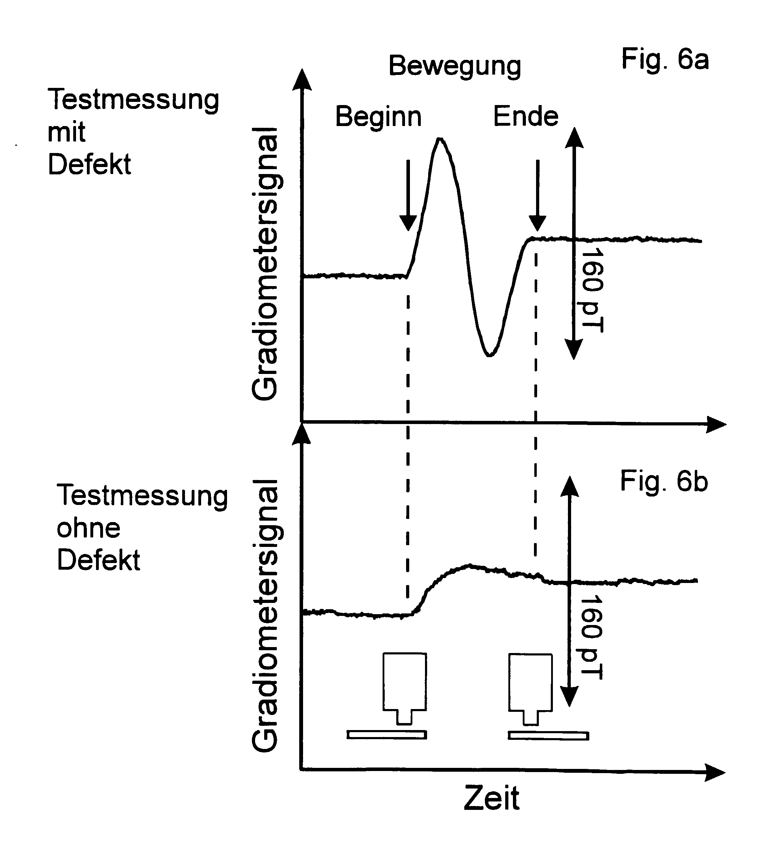

Figur 5 zeigt schematisch den Aufbau eines ersten Testexperimentes mit dem Gradiometer-System, einer Anordnung aus zwei Spulen und zwei Vergleichsproben (eine mit Defekt, eine ohne). Die Probe bestand aus einem Paket von 24 Aluminiumplatten der Dicke 1,5 mm, wobei die unterste gegen eine Platte mit einem Defektschlitz ausgetauscht wurde. Die defekte Probe lieferte bei einem Anregungsspulenstrom von 1 A (peak to peak) bei 10 Hz ein Defektsignal von 150 pT (Figur 6a), während die fehlerfreie Probe nur ein schwach variierendes Signal aufgrund ihrer inneren Leitfähigkeitsstruktur und ihrer Ränder zeigte (Figur 6b). Die Figuren verdeutlichen auch die Reserven wegen des hervorragenden Signal/Rauschverhältnisses.

Durch die spezielle Kompensations-Anregungsspulenanordnung ist bei hohem Anregungsfeld das am Ort des SQUID-Sensors registrierte Feld auf das Niveau des Rauschens der Meßapparatur einstellbar. Alle Abweichungen des Ausgangssignals von Null deuten daher auf einen Fehler im Prüfbauteil hin. Mit einer Figur 3 ersichtlichen Vier-Spulen-Anordnung läßt sich eine weitgehend auf die Richtung von Fehlern (Lage von Rissen etc.) unabhängige Empfindlichkeit erreichen.

Wegen der im Vergleich zu anderen Magnetfeldsensoren besonders hohen Feldempfindlichkeit von SQUID im tiefen Frequenzbereich (1 - 30 Hz) sind kontaktlose Messungen mit besonders hoher Empfindlichkeit bei großer Eindringtiefe möglich. Diese HTSL-SQUID-Meßapparatur ist ohne Abschirmung in Gebäuden in industrieller Umgebung mit nicht zu großen elektrischen Störfeldern einsetzbar. Damit ermöglicht die Anordnung Fehlermessungen an elektrisch leitenden Bauteilen mit komplizierten Konstruktionselementen, wie sie z.B. bei der zerstörungsfreien Werkstoffprüfung an Flugzeugen oder Schiffen vorkommen, mit größerer Eindringtiefe als bisher möglich.

## Patentansprüche

1. Vorrichtung zur zerstörungsfreien Materialprüfung mit Sensor-SQUID in einer SQUID-Gradiometer-Anordnung und einer ersten planaren Anregungsspule,
**gekennzeichnet durch**
wenigstens eine weitere planare Anregungsspule, die mit der ersten in einer zur Gradiometerachse des SQUID-Gradiometers senkrechten Ebene, wobei die Spulenmitten der jeweiligen Anregungsspulen auf einem Kreis liegen und die Gradiometerachse durch die Kreismitte verläuft, und die in Kreisform angeordneten Anregungsspulen zueinander äquidistant angeordnet sind.

2. Vorrichtung zur zerstörungsfreien Materialprüfung nach Anspruch 1,
**gekennzeichnet durch**
eine geradzahlige Anzahl von Anregungsspulen.

3. Vorrichtung zur zerstörungsfreien Materialprüfung nach Anspruch 1 oder 2,
**gekennzeichnet durch**
jeweils einen an der jeweiligen Anregungsspule gekoppelten Lock-In-Verstärker.

4. Vorrichtung zur zerstörungsfreien Materialprüfung nach einem der Ansprüche 1 bis 3,
**gekennzeichnet durch**
eine Zwei-Frequenz-Subtraktionsschaltung.

5. Vorrichtung zur zerstörungsfreien Materialprüfung nach einem der vorhergehenden Ansprüche,
**gekennzeichnet durch**
ein axiales SQUID-Gradiometer.

6. Vorrichtung zur zerstörungsfreien Materialprüfung nach einem der Ansprüche 1 bis 5,
**gekennzeichnet durch**
einen SQUID aus Hochtemperatur-Supraleiter-Material.

7. Verfahren zur zerstörungsfreien Materialprüfung unter Einsatz einer der Vorrichtungen nach Anspruch 1, 2, 3, 4, 5 oder 6.

## Claims

1. Device for the non-destructive testing of materials, having a sensor SQUID in a SQUID gradiometer assembly and a first planar excitation coil,
characterised by at least one further planar excitation coil situated with the first in a plane perpendicular to the gradiometer axis of the SQUID gradiometer, the coil centres of the respective excitation coils lying on a circle and the gradiometer axis running through the centre of the circle, and the excitation coils arranged in the form of a circle being disposed equidistantly to one another.

2. Device for the non-destructive testing of materials according to claim 1,
characterised by an even number of excitation coils.

3. Device for the non-destructive testing of materials according to claim 1 or 2,
characterised in each case by a lock-in amplifier connected at the respective excitation coil.

4. Device for the non-destructive testing of materials according to any of claims 1 to 3,
characterised by a dual-frequency subtracting circuit.

5. Device for the non-destructive testing of materials according to any of the preceding claims,
characterised by an axial SQUID gradiometer.

6. Device for the non-destructive testing of materials according to any of claims 1 to 5,
characterised by a SQUID made from high-temperature superconducting material.

7. Method for the non-destructive testing of materials employing any of the devices according to claims 1, 2, 3, 4, 5 or 6.

## Revendications

1. Dispositif pour le contrôle non destructif de matériaux comportant un dispositif à capteur à dispositif SQUID situé dans un dispositif de mesure de gradient SQUID, et une première bobine d'excitation plane, caractérisé par au moins une autre bobine d'excitation plane, qui est située avec la première bobine d'excitation plane dans un plan perpendiculaire du dispositif de mesure de gradient SQUID, les centres des bobines d'excitation respectives étant situés sur un cercle et l'axe du dispositif de mesure de gradient passant par le centre du cercle, tandis que les bobines d'excitation disposées selon une forme circulaire sont disposées de manière à être équidistantes l'une de l'autre.

2. Dispositif pour le contrôle non destructif de matériaux selon la revendication 1, caractérisé par un nombre pair de bobines d'excitation.

3. Dispositif pour le contrôle non destructif de matériaux selon la revendication 1 ou 2, caractérisé par respectivement un amplificateur de verrouillage couplé à la bobine d'excitation respective.

4. Dispositif pour le contrôle non destructif de matériaux selon l'une des revendications 1 à 3, caractérisé par un circuit soustracteur à deux fréquences.

5. Dispositif pour le contrôle non destructif de matériaux selon l'une des revendications précédentes, caractérisé par un dispositif de mesure de gradient SQUID axial.

6. Dispositif pour le contrôle non destructif de matériaux selon l'une des revendications 1 à 5, caractérisé par un dispositif SQUID formé d'un matériau supraconducteur à haute température.

7. Procédé pour le contrôle non destructif de matériaux employant un des dispositifs selon revendication 1,2,3,4,5 ou 6.
